Europäisches Patentamt

European Patent Office

Office européen des brevets

(11) Veröffentlichungsnummer: **0 247 325 B1**

## (12) EUROPÄISCHE PATENTSCHRIFT

(45) Veröffentlichungstag der Patentschrift: **29.07.92**

(21) Anmeldenummer: **87104664.5**

(22) Anmeldetag: **30.03.87**

(51) Int. Cl.5: **B01D 35/00**, B01D 35/30, B01D 29/96

(54) **Filtervorrichtung.**

(30) Priorität: **27.05.86 DE 3617739**

(43) Veröffentlichungstag der Anmeldung:
**02.12.87 Patentblatt 87/49**

(45) Bekanntmachung des Hinweises auf die
Patenterteilung:
**29.07.92 Patentblatt 92/31**

(84) Benannte Vertragsstaaten:
**AT BE CH DE ES FR GB IT LI NL SE**

(56) Entgegenhaltungen:
**AU-B- 425 195**
**DE-A- 3 320 619**
**FR-A- 1 594 001**
**US-A- 1 813 601**

(73) Patentinhaber: **Gabelgaard, Keld**
**Im Löchle 8**
**W-7141 Beilstein(DE)**

(72) Erfinder: **Gabelgaard, Keld**
**Im Löchle 8**
**W-7141 Beilstein(DE)**

(74) Vertreter: **Geissler, Bernhard, Dr. Patent- und**
**Rechtsanwälte et al**
**Bardehle-Pagenberg-Dost- Altenburg-**
**Frohwitter & Partner Postfach 86 06 20**
**W-8000 München 86(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf eine Filtervorrichtung, die in der zu filternden Flüssigkeit angeordnet ist, und das Filtrat direkt wieder in diese Flüssigkeit abgibt. Insbesondere bezieht sich die vorliegende Erfindung auf eine Unterwasser-Filtervorrichtung.

Es sind bereits Unterwasser-Filtervorrichtungen bekannt, die mittels einer Pumpe zu reinigendes Wasser durch ein Filter ansaugen und bei denen das gereinigte Wasser dann von der Druckseite der Pumpe in das Becken direkt rückgeführt wird. Diese Vorrichtungen haben den Nachteil, daß sie von der Leistung her begrenzt sind, und daß ein Auswechseln der Filter relativ umständlich ist, da die Filter sowohl an der Ansaug- als auch an der Abgabeseite von der Vorrichtung abgekoppelt werden müssen. Das erfordert doppelte Dichtungseinrichtungen und gegebenenfalls sogar doppelte Kopplungseinrichtungen.

Die deutsche Offenlegungsschrift DE-OS 33 20 619 beschreibt eine Filteranlage für Schwimmbecken, die insgesamt im Schwimmbecken angeordnet ist. Die Filteranlage besteht aus Grob- und Feinfiltern und einer Pumpe sowie einem zurücktransportierenden Rücklaufrohr, wobei die Pumpe unterhalb der Grob- und Feinfilter im oder am Filterrohr angeordnet ist und mit dem Filter sowie dem Rücklaufrohr nur lösbar verbunden ist.

Die australische Patentschrift AU-PS 425 195 beschreibt ein luftbetriebenes Filtersystem mit einem Filterelement, das über eine Leitung mit der Druckseite einer Luftmotorpumpe in Verbindung steht. Das bekannte Filtersystem weist keine lösbare Verbindung zwischen Filtereinlaß und Pumpendruckseite auf.

Aufgabe der vorliegenden Erfindung ist es daher, eine einfache Filtervorrichtung zu schaffen, bei der das Auswechseln der Filter rasch und problemlos durchgeführt werden kann. Weiterhin soll bei der Filtervorrichtung in einfacher Weise eine Kontrolle des Filterzustandes ermöglicht werden, damit die Filter zur rechten Zeit ausgetauscht werden können. Eine weitere Aufgabe der Erfindung besteht darin, ein Verfahren zum Filtrieren von Flüssigkeit in einem Behälter zu schaffen, bei dem ein in der zu reinigenden Flüssigkeit befindlicher Filter verwendet wird, und das einen kontinuierlichen Betrieb durch rasches und sicheres Wechseln der Filter ermöglicht.

Diese Aufgaben werden erfindungsgemäß durch Vorrichtungen bzw. Verfahren gelöst, wie sie im einzelnen in den Ansprüchen definiert sind.

Bei der erfindungsgemäßen Vorrichtung ist die Abgabeseite des Filters frei, d.h. es ist an der Abgabeseite keine Ableitung von beträchtlicher Länge vorhanden. Vielmehr wird das Filtrat von dem Filter im wesentlichen direkt in dem Behälter wieder abgegeben, von dem es angesaugt wurde. Wenn bei der Ausführungsform der Erfindung mit zwei Pumpen die beiden Abgabeseiten an denselben Filter angeschlossen werden, so ermöglicht dies eine flexible Arbeitsweise, bei der mit sowohl bei Spitzenbelastung als auch bei Dauerbetrieb gearbeitet werden kann. Auch die Ansaugseiten der beiden Filter können mit einem Ansaugstutzen parallel verbunden werden.

Bei der bevorzugten Ausführungsform der Erfindung ist die Anordnung der einzelnen Elemente in bezug auf den Filter so, daß durch ein Lösen der Verbindung zwischen dem Filter und der übrigen Vorrichtung dieser frei aus der Vorrichtung herausfallen kann und auf diese Weise in einen Filteraufnahmebehälter gelangen kann. Zweckmäßigerweise wird dabei der Filter senkrecht unter der Verbindungseinrichtung hängen, so daß sich der Filter beim Lösen der Verbindung selbständig aus der Vorrichtung befreit und in einen Aufnahmebehälter fallen kann. Besonders geeignet ist dabei ein im wesentlichen zylindrischer Filter, der an der Stirnseite mit der übrigen Vorrichtung verbunden ist.

Es ist bevorzugt, daß die mit der Behälterflüssigkeit in Berührung kommenden Teile der Vorrichtung aus inertem, korrosionsbeständigem Material, insbesondere aus Edelstahl bzw. rostfreiem Stahl, bestehen.

Bei der bevorzugten Ausführungsform der Erfindung ist die Vorrichtung so aufgebaut, daß durch bloßes Lösen der Verbindung zwischen Filtereinheit und Pumpe erstere frei und ungehindert aus der Vorrichtung herausfallen kann. Es bedarf dann keiner Betätigung weiterer mechanischer Einrichtung, wie z. B. von Klappen oder Deckeln oder dergleichen.

Weitere Einzelheiten und bevorzugte Ausführungsformen, sowie Vorteile und Probleme, die durch die erfindungsgemäße Vorrichtung sowie das erfindungsgemäße Verfahren gelöst werden, sind in der folgenden Beschreibung der Zeichnung enthalten. In dieser zeigen:

Fig. 1 eine Seitenansicht einer ersten Ausführungsform

Fig. 2 eine Draufsicht dieser ersten Ausführungsform

Fig. 3 eine Seitenansicht einer zweiten Ausführungsform

Fig. 4 eine Draufsicht dieser zweiten Ausführungsform

Fig. 5 eine Vorderansicht der gleichen Ausführungsform

einer erfindungsgemäßen Unterwasser-Filtervorrichtung.

Auf dem Boden 101 eines Behälters 100 ist die Unterwasser-Filtervorrichtung 1 angeordnet. Zu reinigendes Wasser wird durch den in der Nähe des Bodens 101 angeordneten Ansaugstutzen 3 angesaugt, der mittels Leitungen 4, 4' mit der Ansaugseite jeweils einer Pumpe 5, 5' verbunden ist. Zwei Pumpen 5 und 5' sind vorgesehen, die parallel geschaltet sind, um verschiedene Betriebszustände, nämlich Dauerbetrieb mit der zusätzlichen Sicherheit, bei Ausfallen einer Pumpe 5 bzw. 5 'auf die andere Pumpe 5' bzw. 5 umschalten zu können, und Spitzenbetrieb, bei dem beide Pumpen 5 und 5' simultan und parallel arbeiten.

Die Pumpe 5 bzw. 5' gibt das angesaugte, kontaminierte Wasser druckseitig über Verbindungsleitungen 7, 7' 7'' und einer Einlaßkammer 9 in das Innere eines hohlzylindrischen Filters 11. Das gefilterte Wasser erreicht von der Außenseite des im kontaminierten Wasser des Behälters 100 angeordneten Filters 11 direkt wieder das Wasser des Behälters 100.

Der Filter 11 ist mit einem Ansatz 13 verbunden, an dem ein Flansch 15 angebracht ist. Ein Gegenflansch 17 ist an einem kuppelartigen Verteilerelement 19, das die Einlaßkammer 9 umgibt, angebracht. Das Verteilerelement 19 ist ebenso wie die Pumpen 5 und 5' an einem aus Edelstahl-Elementen bestehenden Rohrrahmen 21 befestigt. Dieser Rahmen 21 weist zwei schlittenkufenartig geformte Rohrabschnitte 23, 23' auf, die jeweils aus einem Auflageabschnitt 230, 230' und einem gebogenen Endabschnitt 231, 231' bestehen. An dem dem Endabschnitt 231, 231' gegenüberliegenden Ende der Vorrichtung ist an dem Rahmen 21 ein Aufhängebügel 27 befestigt, an dem die Unterwasser-Filtervorrichtung 1 gehoben und bewegt werden kann.

An dem Rahmen 21 ist auch eine Verbindungseinrichtung 31 bzw. eine Ent- und Verriegelungseinrichtung 31 befestigt. An dem Flansch 17 sind drei Führungsplatten 33 angebracht, die eine abgeschrägte Auflauffläche 35 aufweisen. Die Verbindungseinrichtung 31 weist drei an den Führungsplatten 33 bei 34 drehbar gelagerte Haken 37 auf. Durch ein Schwenken der Haken 37 werden die Flansche 15 und 17 entweder fest aneinandergedrückt und miteinander verbunden, wodurch eine nicht dargestellte, zwischen den Flanschen 15 und 17 angeordnete elastische Dichtung in dichtenden Eingriff mit den Flanschen 15 und 17 gerät, oder die Flansche 15 und 17 werden freigegeben.

Das jeweilige freie Ende des drehbar gelagerten Hakens 37 ist über jeweils eine Führungsstange 39 mit einer zentralen Hülse 41 verbunden. Nur eine der drei Führungsstangen 39, die alle mit der Hülse 41 bei 49 drehbar verbunden sind, ist in der Zeichnung gezeigt. Die Hülse 41 ist mittels eines Innengewindes längs der Gewindestange 43, auf die die Hülse 41 geschraubt ist, bewegbar. Die Gewindestange 43 ist fest mit der Achse oder Welle eines Motors 45 verbunden. Das freie Ende der Gewindestange 43 ist in einem Lager 47 gelagert, welches mit dem kuppelförmigen Verteilerelement 19 verbunden ist. Beim Laufen des Motors 45 in einer Richtung werden daher die Haken 37 nach innen zum Ankuppeln des Flansches 15 und des Filters 11 bewegt. Beim Laufen des Motors in der anderen Richtung dagegen werden die Haken 37 nach außen geschwenkt, wodurch der Filter 11 samt Ansatz 13 und Flansch 15 freigegeben wird.

In der Verteilerkammer bzw. an der Druckseite der Pumpen 5 und 5' ist ein Drucksensor 51 angeordnet, der ein dem Druck im Filter 11 entsprechendes Signal erzeugt. Wenn dieses Signal einen Druck repräsentiert, der einen Grenzwert überschreitet, dann werden die pumpen 5 bzw. 5' von der Steuervorrichtung 61 ausgeschaltet, mit der der Drucksensor operativ verbunden ist.

Mittels eines nicht dargestellten Hakens wird dann die Vorrichtung 1 an dem Aufhängebügel 27 angehoben und über einen Filteraufnahmebehälter bewegt. Durch dieses Anheben kippt die Vorrichtung, und die gebogenen Endabschnitte 231 bzw. 231' hängen ebenso wie das Filter 11 nach unten.

Der Motor 45 wird nun von der Steuereinrichtung 61 betätigt, so daß die aus Filter 11, Ansatz 13 und Flansch 15 bestehende Einheit von der Vorrichtung durch Verschwenken der Haken 37 gelöst wird und von der Vorrichtung 1 abfällt und in den Filteraufnahmebehälter fällt. Von dort aus kann die Einheit entweder beseitigt oder weiterverarbeitet, z. B. gereinigt werden. Die Vorrichtung 1 wird nun mit Flansch 17 auf eine saubere, noch nicht verstopfte Filtereinheit aufgesetzt. Dabei wird das genaue Ausrichten der Flansche 15 und 17 durch die Auflaufflächen 35 der Platten 33 erleichtert und automatisiert. Durch umgekehrtes Laufen des Motors 45, gesteuert von der Steuerung 61, wird dann die neue Filtereinheit durch ein Verschwenken der Haken 37 angekoppelt. Die Vorrichtung 1 wird dann wieder auf den Boden 101 des Behälters 100 abgesenkt. Die gebogenen Endabschnitte 231, 231' sorgen dabei bei Berührung des Bodens 101 dafür, daß die Vorrichtung auf die geraden Abschnitte 230, 230' der Kufen 23, 23' zu stehen kommt. Der Reinigungsprozeß kann nun wieder beginnen.

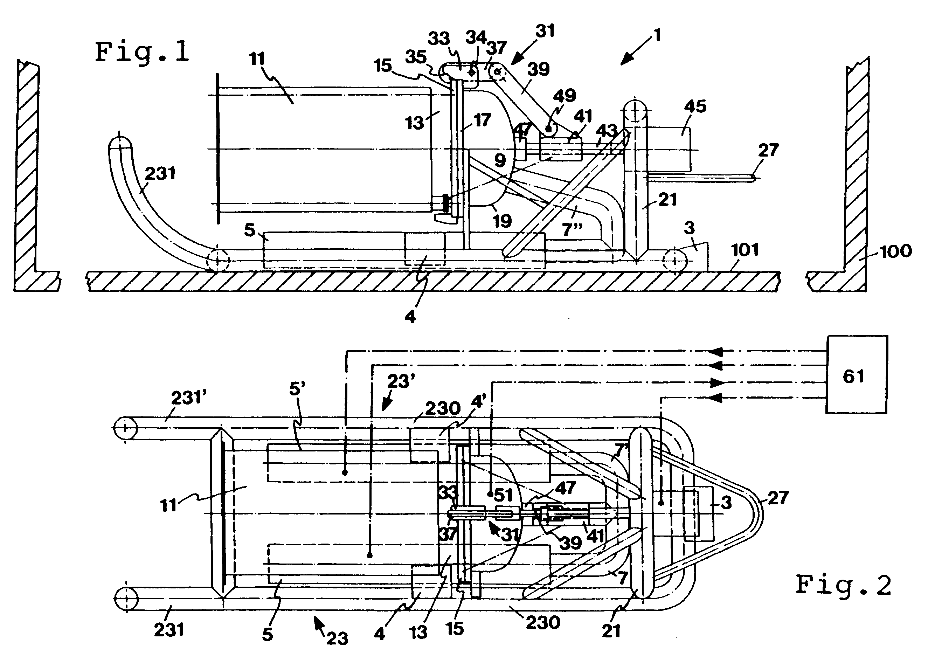

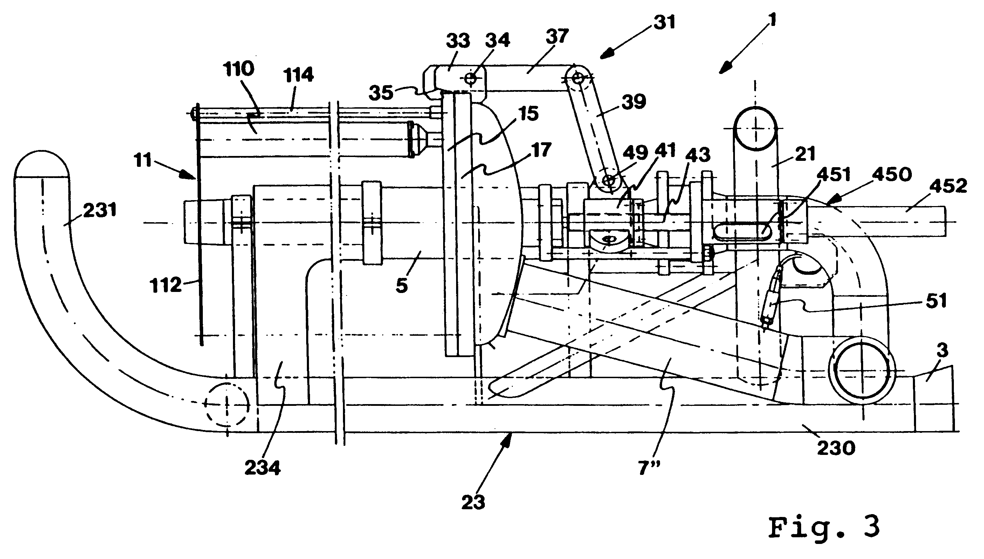

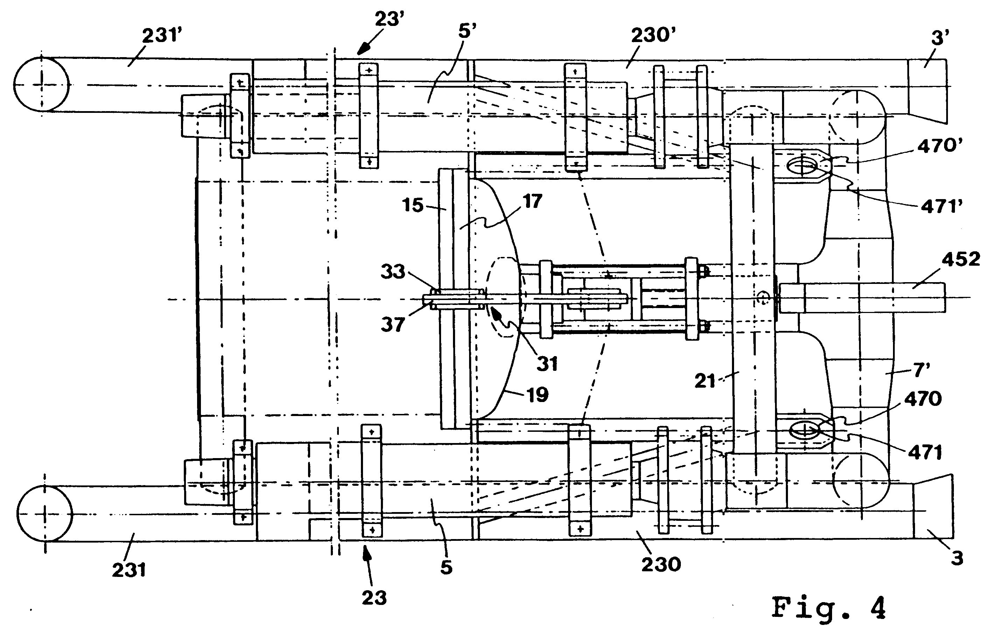

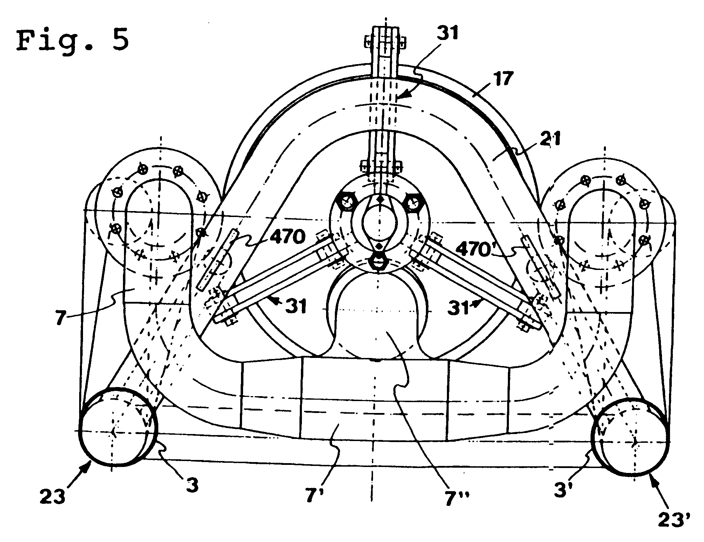

Bei den weiteren in den Fig. 3 bis 5 in den drei Ansichten dargestellten Ausführungsformen der erfindungsgemäßen Anordnung wurden weitestgehend dieselben Bezugszeichen verwendet wie in der Ausführungsform gemäß Fig. 1 und 2. Bei dieser Ausführungsform sind zwei Ansaugstutzen 3 und 3' vorgesehen. Der Motor 45 ist bei der Darstellung dieser Ausführungsform weggelassen. Dieser Motor kann auf die Steckeinrichtung 450 gesteckt werden, wobei die Arretierung über eine einfache Schnappkupplung mit den Schlitzen 451 erfolgt und der Motor die Welle 452 antreibt.

Das Filter 11 ist in Fig. 3 mit zusätzlichen Details dargestellt. An der Flanschplatte 15 sind eine Mehrzahl Filterelemente 110 mittels einer bajonettartigen Befestigung angeordnet. Diese Filterelemente 110 werden durch eine Andruckplatte 112 gegen die Flanschplatte 15 gedrückt und in dieser Position gehalten. Die Andruckplatte 112 wird durch vier Andruckstangen 114 (nur eine in Fig. 3 dargestellt) gegen die Flanschplatte 5 gezogen.

Die Pumpen 5 und 5' sind bei der in Fig. 3 bis 5 gezeigten Ausführungsform etwas höher angeordnet und die beiden Ansaugstutzen 3 sind mit der Ansaugseite der Pumpe über die Leitung 230 und die nach oben führende Verbindungsleitung 234 verbunden.

An dem als umgekehrtes V geformten Rahmen-Rohrelement 21 sind bei dieser Ausführungsform zwei Laschen 470, 470' befestigt. In diesen Laschen 470, 470' ist jeweils eine Öffnung 471, 471' angebracht, die zur Aufnahme des Hebe elementes am Trageseil dient, mit dem die Einrichtung dann in den Flüssigkeitsbehälter wie oben beschrieben bewegt werden kann. Der Vorteil der Anbringung zweier Befestigungselemente in dieser Ausführungsform besteht darin, daß die Bewegung der Vorrichtung damit besser gesteuert werden kann.

**Patentansprüche**

1. Filtervorrichtung, die in einer zu filternden Flüssigkeit angeordnet ist, und welche
   a) einen Rahmen (21);
   b) zumindest eine mit dem Rahmen (21) verbundene Pumpe (5 bzw. 5'); und
   c) eine mit der Ansaugseite der Pumpe (5 bzw. 5') verbundene Ansaugeinrichtung (3) aufweist;
   **gekennzeichnet durch**
   d) zumindest ein Filter (11) mit einer Einlaßseite, wobei die Einlaßseite mit der Druckseite der Pumpe verbunden ist;
   e) eine freistehende Auslaßseite des Filters (11), durch die das Filtrat von dem Filter (11) im wesentlichen direkt in der zu filternden Flüssigkeit wieder abgegeben wird;
   f) eine lösbare Verbindung (31; 37) zwischen Filtereinlaß und Pumpendruckseite, durch die das Filter (11) von der Vorrichtung (1) abgekoppelt werden kann; und
   g) eine direkt oder indirekt an dem Rahmen (21) befestigte, automatisch steuerbare Betätigungsvorrichtung (39, 41, 43) zur Betätigung der lösbaren Verbindung (31; 37).

2. Filtervorrichtung nach Anspruch 1, dadurch gekennzeichnet, daß das Filter (11) so angeordnet ist, daß es zumindest in einer räumlichen Anordnung der Vorrichtung (1) nach Lösen der Verbindung (31; 37) und ohne Betätigung weiterer Mittel frei aus der Vorrichtung (1) herausfallen kann.

3. Vorrichtung nach einem der vorhergehenden Ansprüche, dadurch gekennzeichnet, daß zwei Pumpen (5 und 5') mit dem Rahmen (21) direkt oder indirekt verbunden sind.

4. Vorrichtung nach Anspruch 3, dadurch gekennzeichnet, daß beide Pumpen (5, 5') druckseitig an denselben Filter (11) angeschlossen sind.

5. Vorrichtung nach einem der vorhergehenden Ansprüche, dadurch gekennzeichnet, daß die Betätigungsvorrichtung einen an dem Rahmen (21) befestigten Motor (45) aufweist, der die lösbare Verbindung (31; 37) betätigt.

6. Vorrichtung nach Anspruch 5, dadurch gekennzeichnet, daß die Betätigungseinrichtung ein erstes Getriebe aus einer Spindel (43) und einer auf die Spindel (43) geschraubten Muffe (41) aufweist, welches die Drehbewegung des Motors (45) in eine Linearbewegung der Muffe (41) umwandelt, und ein zweites Getriebe aufweist, mit einem Gestänge (39), das mit der Muffe (41) des ersten Getriebes verbunden ist, und das Lösen bzw. Schließen der Verbindung (31; 37) ermöglicht.

7. Vorrichtung nach einem der vorhergehenden Ansprüche, dadurch gekennzeichnet, daß die Verbindungseinrichtung eine mechanische Klemmeinrichtung (37) aufweist, die einen Filterflansch (15) und einen mit der Druckseite der Pumpe (5 bzw. 5') verbundenen Auslaßflansch (17) zusammenhält, und die automatisch lösbar ausgebildet ist.

8. Vorrichtung nach einem der vorhergehenden Ansprüche, dadurch gekennzeichnet, daß das Filter (11) als hohlzylindrisches Filter ausgebildet ist, welches von der einen Seite geschlossen ist und bei dem die andere Seite derart mit der Druckseite der Pumpe (5 bzw. 5') verbunden ist, daß die Flüssigkeit von der Pumpe in die Innenseite des Hohlzylinders gedrückt wird.

9. Vorrichtung nach einem der vorhergehenden Ansprüche, gekennzeichnet durch ein Befestigungselement (27) für ein Hebezeug, das derart relativ zu der Vorrichtung angeordnet ist, daß sich beim Heben der Vorrichtung (1) vom Boden eines Behälters, in der die Vorrichtung angeordnet war, diese Vorrichtung um einen vorgegebenen Winkel, insbesondere ca. 90°, dreht, wodurch die Vorrichtung in diejenige räumliche Anordnung gelangt, in der das Filter (11) beim Lösen der Verbindung frei aus der Vorrichtung herausfällt.

10. Vorrichtung nach einem der vorhergehenden Ansprüche, gekennzeichnet durch einen Drucksensor (51) zur Erzeugung eines den Druck an der Filtereinlaßseite entsprechenden Signales.

11. Vorrichtung nach Anspruch 10, gekennzeichnet durch eine Steuereinrichtung (61) mit einem Eingang, der mit dem Drucksensor (51) operativ derart verbunden ist, daß die Steuereinrichtung die Pumpe (5 bzw. 5,) abschaltet, wenn das Signal des Drucksensors (51) die Überschreitung eines Druckgrenzwertes anzeigt.

12. Verfahren zum kontinuierlichen Reinigen einer Flüssigkeit in einem Behälter mittels einer in dem Behälter angeordneten Filtervorrichtung, gekennzeichnet durch folgende Verfahrensschritte:

a) Pressen der Flüssigkeit durch ein Filter (11), das in einem Rahmen (21) in dem Flüssigkeitsbehälter (100) angeordnet, ist;

b) Abgabe eines Filtrats von dem Filter (11) direkt zurück in den Flüssigkeitsbehälter (100),

c) Bewegen des Rahmens (21) mit dem kontaminierten Filter (11) über eine Filteraufnahmeeinrichtung;

d) Abkoppeln des kontaminierten Filters (11) von dem Rahmen (21) und Übertragung des Filters (11) in die Filteraufnahmeeinrichtung.

13. Verfahren nach Anspruch 12, gekennzeichnet durch die weiteren Verfahrenschritte

e) Ankoppeln eines frischen Filters an den Rahmen;

f) Bewegen des Rahmens (21) an eine Stelle des Flüssigkeitsbehälters (100) zur weiteren Reinigung der Flüssigkeit;

g) Wiederholung der Reinigungs- und Filterwechselschritte a) bis g).

14. Verfahren nach einem der vorhergehenden Verfahrensansprüche, dadurch gekennzeichnet,

daß der Druck an der Filtereingangsseite automatisch festgestellt wird und daß ein diesem Druck entsprechendes Signal erzeugt wird,

daß dieses Signal einer Steuereinrichtung aufgegeben wird,

daß die Steuereinrichtung ein Steuersignal abgibt, welches die Pumpe bzw. Pumpen dann ausschaltet, wenn das Drucksignal einen Druck repräsentiert, der einen vorgegebenen Druckgrenzwert übersteigt.

## Claims

1. Filtering device which is arranged in a liquid to be filtered and which has:

a) a frame (21);

b) at least one pump (5 and 5') connected to the frame (21); and

c) an inward suction means (3) connected to the inward suction side of the pump (5 and 5');

characterized by

d) at least one filter (11) having an inlet side, the inlet side being connected to the pressure side of the pump;

e) a free outlet side of the filter (11) through which the filtrate is discharged from the filter (11) substantially directly back into the liquid to be filtered;

f) a detachable connection (31; 37) between the filter inlet and the pump pressure side, by means of which the filter (11) can be uncoupled from the device (1); and

g) an automatically controllable actuating device (39, 41, 43) which is secured directly or indirectly to the frame (21), for actuating the detachable connection (31; 37).

2. Filtering device according to Claim 1, characterized in that the filter (11) is arranged such that it can fall freely out of the device (1) at least in a spatial arrangement of the device (1) after detaching the connection (31; 37) and without the actuation of further means.

3. Device according to one of the preceding claims, characterized in that two pumps (5 and 5') are connected directly or indirectly to the frame (21).

4. Device according to Claim 3, characterized in that both pumps (5, 5') are connected to the same filter (11) on the pressure side.

5. Device according to one of the preceding claims, characterized in that the actuating device has a motor (45) which is secured to the frame (21) and which actuates the detachable connection (31; 37).

6. Device according to Claim 5, characterized in that the actuating means has a first gear comprising a spindle (43) and a sleeve (41) screwed onto the spindle (43), this gear converting the rotary movement of the motor (45) into a linear movement of the sleeve (41), and has a second gear, having a linkage (39), which is connected to the sleeve (41) of the first gear and enables the connection (31; 37) to be detached or made.

7. Device according to one of the preceding claims, characterized in that the connection means has a mechanical clamping means (37) which holds together a filter flange (15) and an outlet flange (17) connected to the pressure side of the pump (5 or 5'), this connection means being constructed to be automatically detachable.

8. Device according to one of the preceding claims, characterized in that the filter (11) is constructed as a hollow cylindrical filter which is closed on one side and in which the other side is connected to the pressure side of the pump (5 or 5') such that the liquid is pressed by the pump into the interior of the hollow cylinder.

9. Device according to one of the preceding claims, characterized by a securing element (27) for a lifting mechanism which is arranged relative to the device such that, on lifting the device (1) from the bottom of a container in which the device was arranged, this device rotates about a predetermined angle, in particular approximately 90°, as a result of which the device reaches the spatial arrangement in which the filter (11) falls freely out of the device on detaching the connection.

10. Device according to one of the preceding claims, characterized by a pressure sensor (51) for generating a signal corresponding to the pressure at the filter inlet side.

11. Device according to Claim 10, characterized by a control means (61) having an input which is operatively connected to the pressure sensor (51) such that the control means switches off the pump (5 or 5') when the signal of the pressure sensor (51) displays exceeding of a pressure limit value.

12. Process for continuously cleaning a liquid in a container by means of a filtering device arranged in the container, characterized by the following process steps:
    a) pressing the liquid through a filter (11) which is arranged in a frame (21) in the liquid container (100);
    b) discharging a filtrate from the filter (11) directly back into the liquid container (100),
    c) moving the frame (21) with the contaminated filter (11) by way of a filter-receiving means;
    d) uncoupling the contaminated filter (11) from the frame (21) and transferring the filter (11) into the filter-receiving means.

13. Process according to Claim 12, characterized by the further process steps:
    e) coupling a fresh filter onto the frame;
    f) moving the frame (21) to a position in the liquid container (100) for further cleaning of the liquid;
    g) repeating the cleaning and filter-changing steps a) to g).

14. Process according to one of the preceding process claims, characterized in that the pressure at the filter input side is established automatically, and in that a signal corresponding to this pressure is generated, in that this signal is passed on to a control means, in that the control means emits a control signal which switches off the pump or pumps if the pressure signal represents a pressure exceeding a predetermined pressure limit value.

**Revendications**

1. Dispositif de filtration disposé dans un fluide à filtrer et présentant
    a) un châssis (21);
    b) au moins une pompe (5, respectivement 5') reliée au châssis (21); et
    c) un dispositif d'aspiration (3) relié au côté d'aspiration de la pompe (5, respectivement 5');
    caractérisé par
    d) au moins un filtre (11) avec un côté admission, dans lequel le côté admission est relié au côté refoulement de la pompe;
    e) un côté évacuation du filtre (11), libre, par lequel le produit filtré repasse essentiellement directement du filtre (11) dans le fluide à filtrer;
    f) un raccordement détachable (31; 37) entre l'admission du filtre et le côté refoulement de la pompe, par lequel le filtre (11) peut être désaccouplé du dispositif (1); et
    g) un dispositif de commande (39, 41, 43) automatique, fixé directement ou indirectement sur le châssis (21) pour l'actionnement du raccordement amovible (31; 37).

2. Dispositif de filtration selon la revendication 1, caractérisé en ce que le filtre (11) est disposé de façon à ce qu'il puisse se détacher librement du dispositif (1) au moins dans une disposition de l'espace du dispositif (1), après déconnexion du raccordement (31; 37) et sans actionner d'autres moyens.

3. Dispositif selon l'une des revendications précédentes, caractérisé en ce que deux pompes (5 et 5') sont reliées directement ou indirectement au châssis (21).

4. Dispositif selon la revendication 3, caractérisé en ce que les deux pompes (5, 5') sont raccordées du côté refoulement, au même filtre (11).

5. Dispositif selon l'une des revendications précédentes, caractérisé en ce que le dispositif de commande présente un moteur (45) fixé au châssis (21), qui actionne le raccordement amovible (31; 37).

6. Dispositif selon la revendication 5, caractérisé en ce que le dispositif de commande présente un premier engrenage d'un axe (43) et d'un manchon (41) vissé sur l'axe (43), ledit engrenage transformant le mouvement rotatif du moteur (45) en un mouvement linéaire du manchon (41), et un deuxième engrenage avec un système de tiges (39) qui est relié au manchon (41) du premier engrenage, et qui permet le désaccouplement, respectivement la fermeture du raccordement (31; 37).

7. Dispositif selon l'une des revendications précédentes caractérisé en ce que le dispositif de raccordement présente un dispositif de serrage mécanique (37) qui maintient une flasque (15) du filtre et une flasque d'évacuation (17) connectée au côté refoulement de la pompe (5, respectivement 5'), et qui est peut être déconnecté automatiquement.

8. Dispositif selon l'une des revendications précédentes, caractérisé en ce que le filtre (11) est conçu comme un filtre cylindrique creux qui est fermé sur un côté et dans lequel l'autre côté est relié avec le côté refoulement de la pompe (5, respectivement 5') de sorte que le liquide est refoulé de la pompe sur le côté interne du cylindre creux.

9. Dispositif selon l'une des revendications précédentes, caractérisé par un élément de fixation (27) pour un vérin, qui est disposé par rapport au dispositif de telle sorte que par soulèvement du dispositif (1) du fond d'un réservoir dans lequel est placé le dispositif, ce dispositif tourne d'un angle prédéterminé, en particulier d'environ 90°, ce qui permet au dispositif d'atteindre celle des positions dans l'espace dans laquelle le filtre (11) se détache librement du dispositif lors de la déconnexion du raccordement.

10. Dispositif selon l'une des revendications précédentes, caractérisé par un capteur de pression (51) produisant un signal correspondant à la pression de refoulement sur le côté admission du filtre.

11. Dispositif selon la revendication 10, caractérisé par un organe de manoeuvre (61) comprenant une ouverture qui est reliée en opération au capteur de pression (51) de façon à ce que l'organe de manoeuvre déconnecte la pompe (5, respectivement 5') lorsque le signal du capteur de pression (51) indique le dépassement d'une valeur limite de pression.

12. Procédé de nettoyage continu d'un fluide dans un réservoir au moyen d'un dispositif de filtre placé dans un réservoir, caractérisé par les différentes opérations suivantes :
    a) compression d'un fluide par un filtre (11) qui est disposé dans un châssis (21) dans le réservoir de fluide (100);
    b) passage d'un produit filtré du filtre (11) directement à nouveau dans le réservoir de fluide (100);
    c) déplacement du châssis (21) avec le filtre (11) contaminé par l'intermédiaire d'un dispositif d'admission du filtre;
    d) désaccouplement du filtre (11) contaminé du châssis (21) et transfert du filtre (11) dans le dispositif d'admission du filtre.

13. Procédé selon la revendication 12, caractérisé par les opérations ultérieures suivantes :
    e) solidarisation d'un filtre neuf sur le châssis;
    f) déplacement du châssis (21) en un point du réservoir de fluide (100) pour le nettoyage ultérieur du fluide;
    g) répétition des opérations de nettoyage et de changement de filtre a) à g).

14. Procédé selon l'une des revendications précédentes, caractérisé
    en ce que la pression sur le côté admission du filtre est automatiquement décelé et en ce qu'un signal correspondant à cette pression est généré,
    en ce que ce signal est donné par un organe de manoeuvre,
    en ce que l'organe de manoeuvre délivre un signal qui déconnecte alors la pompe, respectivement les pompes lorsque le signal de la pression représente une pression qui dépasse une valeur limite de pression prédéterminée.

Fig.1

EP 0 247 325 B1

Fig.2

8

Fig. 3

Fig. 4

EP 0 247 325 B1

Fig. 5

EP 0 247 325 B1